# EUROPÄISCHE PATENTSCHRIFT

(11) **EP 0 567 110 B1**
(45) Veröffentlichungstag und Bekanntmachung des Hinweises auf die Patenterteilung: **15.11.1995**
(21) Anmeldenummer: 93106534.6
(22) Anmeldetag: 22.04.1993
(51) Int. Cl.: C09J 7/02, B32B 5/24

(54) **Zweiseitig klebendes Klebeband**
Two-sided adhesive tape
Ruban adhésif des deux côtés

(30) Priorität: 24.04.1992 DE 9205610 U
(43) Veröffentlichungstag der Anmeldung: 27.10.1993
(73) Patentinhaber: Silu Verwaltung AG, CH-6030 Ebikon (CH)
(72) Erfinder: Sieber, Marco, CH-6026 Rain (CH); Sieber, Reto, CH-6030 Ebikon (CH)
(74) Vertreter: Blum, Rudolf Emil Ernst

(56) Entgegenhaltungen:
- WO-A-91/00804
- DE-A- 1 594 097
- US-A- 4 687 692

## Beschreibung

Die Erfindung betrifft ein zweiseitig klebendes Klebeband oder eine zweiseitig klebende Klebefolie mit einem Träger, der beidseits einen Kleberfilm trägt.

Zweiseitig klebende Bänder bestehen aus einem Träger, der oben und unten mit einem Kleberfilm beschichtet ist. Als Träger werden meistens Gewebe aus Zellwolle, Baumwolle oder aus Kunstfasern verwendet oder Wirrfaservliese, Papiere oder Folien aus PP, PVC oder PE etc.

Die Funktion all dieser Träger besteht darin, den Kleberfilm zu tragen und festzuhalten, damit das Klebeband überhaupt vom Verarbeiter verarbeitet werden kann. Die Kombination von Träger und Klebermasse erlaubt es, das Klebeband an jeder beliebigen Stelle zu durchtrennen. Beim Abschneiden oder Abreissen einer reinen Klebemasse ohne Träger, bleibt der Kleberfilm am Messer, an der Schere oder an den Händen kleben und verhält sich wie ein elastisches Band, das sich unter Zugkraft immer mehr verjüngt bis zu einem langen, dünnen Faden, der dann reisst.

Bei vielen Anwendungen von zweiseitig klebendem Klebeband, z.B. beim Verlegen von Teppichen, ist es wünschbar, wenn das Klebeband rückstandsfrei von einer der Oberflächen (dem Boden) abgelöst werden kann.

Verschiedene Faktoren beeinflussen die Ablösbarkeit von einer Oberfläche.
1. Die Kohäsion des Klebers (innerer Zusammenhalt der Klebermasse) muss grösser sein als die Adhäsion (Haftkraft der Klebermasse nach aussen) zur beklebten Oberfläche.
2. Die Festigkeit der inneren Struktur dieser beklebten Oberfläche (Kohäsion der Oberfläche) muss grösser sein als die Adhäsion der Oberfläche zum Kleber.
3. Es muss ein Träger verwendet werden und die Adhäsion des Klebers zum Träger muss grösser sein als zur Oberfläche. Falls kein Träger eingesetzt wird und das Klebeband aus einer reinen Klebermasse besteht, ist ein Ablösen dieser Klebermasse durch Zugkräfte nahezu nicht möglich. Die Klebermasse muss mit Lösungsmitteln aufgeweicht werden, wobei die beklebte Oberfläche meistens in Mitleidenschaft gezogen wird.
4. Ein Ablösen des Klebebandes ist dann möglich, wenn die Reissfestigkeit des Trägers grösser ist als die Zugkräfte, die zum Ablösen des Klebers von der Oberfläche (Adhäsionskraft) benötigt werden. In den meisten Fällen trifft das bei Trägern aus Gewebe aus Zellwolle, Baumwolle oder aus Kunstfasern oder aus Folien aus PP, PVC oder PE etc. zu. Solche Trägermaterialien sind indes relativ teuer.

Beim Einsatz eines Papierträgers lässt sich ein Klebeband nur Stück um Stück entfernen, weil die Reissfestigkeit des Trägers kleiner ist als die Zugkraft, die nötig ist um den Kleber von de beklebten Oberfläche wieder abzulösen bzw. dessen Adhäsionskraft zu überwinden.

Der Papierträger hat aber den Vorteil, dass er sehr kostengünstig ist und dass die Adhäsion des Klebers darauf in den meisten Fällen höher ist als gegenüber einer zu beklebenden Oberfläche, weil beim Auftrag des flüssigen Klebers dieser in die Tiefe der Poren des Papierträgers eindringt. Die Folge davon ist, dass beim Lösen einer solchen Klebebandverbindung, der Kleber nahezu keine Rückstände hinterlässt, im Gegensatz zu Klebebändern mit Trägern aus Geweben, bei denen aus den Zwischenräumen von Kette und Schuss frei hängende Kleberteilchen ausgerissen werden können.

Der Erfindung liegt deshalb die Aufgabe zugrunde ein zweiseitiges Klebeband der eingangs genannten Art zu schaffen, welches sich so verhält, wie ein Klebeband mit reissfestem Träger, so dass dieses Klebeband ohne zu reissen von einer Oberfläche wieder abgelöst werden kann, und welches keine Kleberrückstände hinterlässt, und für welches kostengünstige Trägermaterialien verwendet werden können. Ferner soll das Klebeband einfach herstellbar sein. Weiter soll die Klebkraft jeder Seite in weitem Bereich, auf einfache Weise und reproduzierbar einstellbar sein.

Die genannten Vorteile werden erfindungsgemäss bei einem Klebeband mit den kennzeichnenden Merkmalen des Schutzanspruchs 1 erreicht.

Der zweischichtige Träger mit der porösen ersten Trägerschicht für den Kleberfilm und der netzartigen, reissfesten zweiten Trägerschicht bewirkt einerseits eine gute Haftung des Kleberfilms am Träger, was Kleberrückstände an der beklebten Oberfläche beim Ablösen verhindert. Andererseits verhindert die zweite Trägerschicht ein Reissen des ganzen Trägers beim Ablösen. Für beide Schichten können sehr kostengünstige Materialien verwendet werden, welche zusammen indes die Eigenschaften wesentlich teurerer Materialien übertreffen können. Da die erste Trägerschicht porös ist, kann die Herstellung des Klebebandes in einem Durchlauf des Trägers durch eine Beschichtungsmaschine erfolgen. Die poröse Trägerschicht wird dabei von dem Klebstoff durchtränkt, wodurch beidseits des Trägers ein Kleberfilm gebildet wird. Die Einstellung der Klebkraft auf beiden Seiten kann dabei unter anderem durch die Dicke der Trägerschicht und die Viskosität des Klebstoffes erfolgen. Die Ausbildung der zweiten Trägerschicht wirkt bei der Einstellung der Klebkraft jener Seite des Bandes, an welcher sie vorgesehen ist ebenfalls mit, da der Kleberfilm jener Seite nicht völlig eben ist, sondern Vertiefungen aufweist, bei welchen der Kontakt zwischen Kleberfilm und zu beklebender Oberfläche geringer ist.

Im folgenden werden Ausführungsbeispiele der Erfindung anhand der Zeichnungen näher erläutert. Dabei zeigt:
Figur 1 schematisch und nicht den realen Grössenverhältnissen entsprechend eine Seitenansicht eines Abschnitts des Klebebandes;
Figur 2 schematisch eine Draufsicht auf den Bandabschnitt von Fig. 1, wobei zur besseren Darstellung der Kleberfilm in einer Ecke abgelöst ist;
Figur 3 schematisch den Schichtaufbau eines Klebebandes;
Figur 4 schematisch einen weiteren Schichtaufbau.

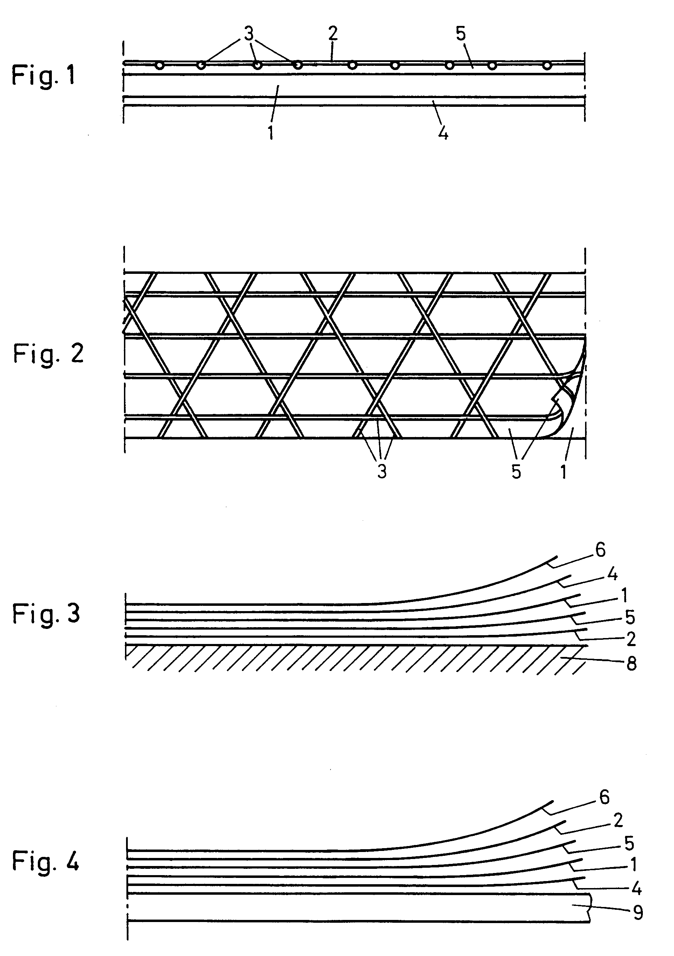

In Figur 1 ist die erste, poröse Trägerschicht mit 1 bezeichnet. Die netzartige Trägerschicht 2 ist aus einzelnen Fäden 3 aufgebaut. Ein Klebstoff, der die Trägerschicht 1 mindestens teilweise durchtränkt, bildet die Kleberfilme 4 und 5. Figur 2 zeigt eine Draufsicht auf den Kleberfilm 5 und die darin sichtbaren Fäden 3 der Trägerschicht 2. Anstelle des gezeigten schiefwinkligen Verlaufs der Fäden kann auch ein kreuzweiser, rechtwinkliger Verlauf vorgesehen sein.

Als erste Trägerschicht wird z.B. ein gewöhnliches Seiden- oder Vliespapier oder ein dünnes Wirrfaservlies verwendet, welches keine geschlossenen Oberflächen bildet. Solche ersten Trägerschichten sind sehr kostengünstig. Dieses Papier oder Vlies dient als Träger für den Kleberfilm auf beiden Seiten.

Da diese Trägerschicht 1 den Nachteil hat, dass sie insbesondere bei der Wiederaufnahme schnell und oft reisst - die Reissfestigkeit ist geringer als die Adhäsionskraft des Klebers zur beklebten Oberfläche - wird eine zweite Trägerschicht 2 zwischen der Oberfläche, von der das Klebeband wieder abgelöst werden soll, und der Trägerschicht 1 vorgesehen. Dabei handelt es sich vorzugsweise um ein weitmaschiges Gewirk aus natürlichen oder künstlichen Fäden, die kreuzweise oder diagonal übereinandergelegt sind, vorzugsweise drei Faden pro cm in der Kette und ein Faden pro 2,5 cm im Schuss mit je nach Anwendung unterschiedlichen Flächengewichten von beispielsweise fünf g/qm. Solch ein Gewirk ergibt genügende Reissfestigkeit des Trägers aus Papier/Gewirk bzw. aus Wirrfaservlies/Gewirk und ist ebenfalls sehr kostengünstig.

Diese Trägerschicht 2 hat die Aufgabe die Trägerschicht 1 zu tragen und quasi als Netz sicherzustellen, dass beim Ablösen die Trägerschicht 1 nicht reisst, oder, falls ein Reissen stattfindet, dass keine Teile der Trägerschicht 1 an der Oberfläche zurückbleiben, sondern im Netz hängenbleiben.

Diese Aufteilung der traditionellen Funktion eines Trägers auf zwei Trägerschichten, die Trägerschicht 1 trägt den Kleberfilm und sorgt für eine bessere Verankerung (Adhäsion) des Klebers gegenüber dem Träger als gegenüber der zu beklebenden Oberfläche, die Trägerschicht 2 trägt die Trägerschicht 1 und sorgt dafür, dass keine Teile der Trägerschicht 1 beim Ablösen von der Oberfläche reissen und dort zurückbleiben, ermöglichen billigste Trägermaterialien für beide Funktionen einzusetzen.

Da beide Trägerschichten keine geschlossene Oberfläche bilden, kann dieses Klebeband in einem Produktionsdurchlauf hergestellt werden. Beim Auftrag des flüssigen Klebers - beispielsweis einer Acrylatdispersionsharzformulierung - dringt dieser durch die Trägerschicht 1 hindurch, so dass sich auch auf deren zweiten Seite ein Kleberfilm bildet. Da die Trägerschicht 2 nur eine minimale Fläche des Kleberfilmes abdeckt, bleibt genügende freie, klebende Fläche zurück, um für eine geeignete Haftkraft zu sorgen. Die Trägerschicht 2 kann nach oder während der Bildung des Kleberfilmes 5 auf bzw. in diesen angeordnet werden. Bei dieser Herstellungsweise wird die Schicht 1 vom Kleber durchtränkt. Werden wie üblich zwei Beschichtungsdurchgänge vorgenommen, so wird die Trägerschicht von beiden Seiten her getrankt.

Durch die Wahl der Dicke und/oder der Porengrösse der Trägerschicht 1 oder die Steuerung der Grösse und/oder der Anzahl Festkörper und/oder der Viskosität im Kleber kann die Masse, die durch die Trägerschicht 1 hindurchdringt und den Kleberfilm auf der zweiten Seite bildet, genau und reproduzierbar gesteuert werden.

Diese Haftkraft der zweiten Seite lässt sich zusätzlich steuern durch die Dichte des Gewirkes der Trägerschicht 2 bzw. durch die Dicke der einzelnen Fasern dieses Gewirkes. Es gilt in der Regel: Je dichter das Gewirk, d.h. je mehr Fäden pro cm, umso geringer ist die Haftkraft, weil eine grössere Fläche des Kleberfilms abgedeckt wird und umgekehrt und je dicker die Fäden sind, umso kleiner ist die Haftkraft, weil die Distanz der zu beklebenden Oberfläche zum Kleberfilm grösser wird und damit die Berührungsfläche kleiner wird. Dasselbe gilt beim Einsatz eines Geflechtes oder Gewebes anstelle des Gewirkes.

Durch die Wahl, auf welcher Seite der Trägerschicht 1 die Trägerschicht 2 aufgebracht wird, kann bewusst gesteuert werden, von welchen der beiden durch dieses Klebeband zu verbindenden Oberflächen, das Klebeband wieder abgelöst werden kann, bzw. mit welcher Oberfläche eine möglichst nicht ablösbare Klebeverbindung hergestellt werden soll. Folgende Anwendungsbeispiele sollen das verdeutlichen:
Soll ein gemäss der Erfindung hergestelltes Klebeband als ein auf den Boden 8 zu klebendes Teppichlegeband ausgestaltet sein, so erfolgt der Aufbau der Schichten gemäss Figur 3. Es fällt auf, dass die Trägerschicht 2 der ersten Schicht entspricht. Die letzte Schicht ist ein beidseitig silikonisiertes Schutzpapier 6 oder eine beidseitig silikonisierte Schutzfolie, die ein leichtes Abwickeln der aufgewickelten Klebebandrollen ermöglicht. In der Verarbeitungsfolge wird bei dem auf dem Boden aufgeklebten Band das Schutzpapier abgezogen und ein Bodenbelag auf die freie Fläche des Klebebandes gelegt. Als Resultat stellen wir fest, dass die Trägerschicht 2 zwischen dem Boden und der Trägerschicht 1 zu liegen kommt, so dass das Klebeband zusammen mit dem Bodenbelag ohne Rückstände vom Boden wieder abgelöst werden kann.

Soll ein gemäss der Erfindung hergestelltes Klebeband auf den Rücken eines Bodenbelages 9 geklebt werden, so erfolgt der Aufbau der Schichten gemäss Figur 4. Die Trägerschicht 2 entspricht der zweitletzten Schicht, unmittelbar vor der letzten Schicht, die durch ein beidseitig silikonisiertes Schutzpapier oder eine beidseitig silikonisierte Schutzfolie gebildet wird, was ein leichtes Abwickeln der aufgewickelten Klebebandrollen ermöglicht. In der Verarbeitungsfolge wird das Band auf den Rücken des Bodenbelages aufgebracht und das Schutzpapier abgezogen und der Bodenbelag, ausgerüstet mit dem Klebeband, auf den Boden gelegt. Die Trägerschicht 2 kommt zwischen den Boden und der Trägerschicht 1 zu liegen, so dass das Klebeband zusammen mit dem Bodenbelag ohne Rückstände vom Boden wieder abgelöst werden kann.

Soll z.B. ein Bodenbelag vom Boden (oder ein Wandbelag von einer Wand), der mit einem gemäss der Neuerung hergestellten Klebeband ausgerüstet ist, wieder abgelöst werden, ohne dass das Band am Bodenbelag haften bleibt, so erfolgt der Aufbau der Schichten auch gemäss Figur 4.

In der Verarbeitungsfolge wird das Band aber auf den Boden geklebt, das Schutzpapier abgezogen, und der Bodenbelag auf den mit dem Band ausgerüsteten Boden aufgebracht. Die Trägerschicht 2 kommt zwischen dem Bodenbelag und der Trägerschicht 1 zu liegen, so dass das Klebeband fest mit dem Boden verbunden bleibt und der Bodenbelag ohne das Band wieder abgelöst werden kann.

## Patentansprüche

1. Zweiseitig klebendes Klebeband oder zweiseitig klebende Klebefolie mit einem Träger, der beidseits einen Kleberfilm trägt, dadurch gekennzeichnet, dass der Träger mindestens zwei Schichten aufweist, eine erste poröse Trägerschicht (1), die mit einem Kleber getränkt ist, welcher beidseits je den Kleberfilm (4,5) bildet, und eine netzartige, auf einer Seite der ersten Trägerschicht angeordnete und im Kleberfilm (5) eingebettete zweite Trägerschicht (2) zur Erhöhung der Reissfestigkeit der ersten Trägerschicht.

2. Klebeband nach Anspruch 1, dadurch gekennzeichnet, dass die erste Trägerschicht aus Papier besteht.

3. Klebeband nach Anspruch 2, dadurch gekennzeichnet, dass die Trägerschicht aus Seiden- oder Vliespapier besteht.

4. Klebeband nach Anspruch 1, dadurch gekennzeichnet, dass die erste Trägerschicht aus einem Wirrfaservlies besteht.

5. Klebeband nach Anspruch 1 bis 4, dadurch gekennzeichnet, dass die zweite Trägerschicht von einem Gewirk aus natürlichen oder künstlichen Fasern (3) gebildet ist.

6. Klebeband nach einem der Ansprüche 1 bis 4, dadurch gekennzeichnet, dass die zweite Trägerschicht von einem Geflecht aus natürlichen oder künstlichen Fasern gebildet ist.

7. Klebeband nach einem der Ansprüche 1 bis 4, dadurch gekennzeichnet, dass die zweite Trägerschicht von einem Gewebe aus natürlichen oder künstlichen Fasern gebildet ist.

## Claims

1. Double-coated adhesive tape or double-coated adhesive foil including a carrier having an adhesive film on both sides, characterised in that the carrier presents at least two layers, a first layer being a porous carrier layer (1) impregnated with an adhesive which forms on both sides thereof one respective adhesive film (4, 5), and a network-like second layer (2) arranged at one side of said first layer and embedded in the adhesive film (5) present at one side, for the increase of the tear strength of the first support layer.

2. The adhesive tape or foil according to claim 1, characterised in that the first layer of the carrier consists of paper.

3. The adhesive tape or foil according to claim 2, characterised in that the first layer of the carrier consists of tissue paper or non-woven paper.

4. The adhesive tape or foil according to claim 1, characterised in that the first layer of the carrier consists of a web of refuse fibres.

5. The adhesive tape or foil according to claim 1, characterised in that the second layer of the carrier is formed by a knitted fabric of natural or synthetic (3) fibres.

6. The adhesive tape or foil according to claim 1, characterised in that the second layer of the carrier is formed by a network of natural or synthetic fibres.

7. The adhesive tape or foil according to claim 1, characterised in that the second layer of the carrier is formed by a weaving of natural or synthetic fibres.

## Revendications

1. Bande adhésive double-face ou film adhésif double-face avec un support portant sur les deux faces un film adhésif, caractérisée en ce que le support présente au moins deux couches, dont une première couche de support poreux (1), étant imprégnée avec un produit adhésif qui forme sur les deux côtés le film adhésif (4, 5) et une deuxième couche de support (2) réticulée, placée sur la première couche de support et encadrée dans le film adhésif (5) pour l'augmentation de la résistance à la rupture de la première couche de support.

2. Bande adhésive suivant la revendication 1, caractérisée en ce que la première couche de support consiste en du papier.

3. Bande adhésive suivant la revendication 2, caractérisée en ce que la couche de support consiste en du papier de soie ou du papier non-tissé.

4. Bande adhésive suivant la revendication 1, caractérisée en ce que la première couche de support consiste en une bourre de fibre non-tissée.

5. Bande adhésive suivant la revendication 1 à 4, caractérisée en ce que la deuxième couche de support est formée par un tricot de fibres naturelles ou synthétiques (3).

6. Bande adhésive suivant la revendication 1 à 4, caractérisée en ce que la deuxième couche de support est formée par une tresse de fibres naturelles ou synthétiques.

7. Bande adhésive suivant la revendication 1 à 4, caractérisée en ce que la deuxième couche de support est formée par un tissu de fibres naturelles ou synthétiques.
